# FASCICULE DE BREVET EUROPEEN

(11) **EP 1 866 105 B1**
(45) Date de publication et mention de la délivrance du brevet: **24.02.2010**
(21) Numéro de dépôt: 05824063.1
(22) Date de dépôt: 01.12.2005
(51) Int. Cl.: B07C 3/00

(54) **PROCÉDÉ DE TRAITEMENT D'ENVOIS INCLUANT UNE GESTION DES EMPREINTES NUMÉRIQUES DES ENVOIS**
VERFAHREN ZUR BEARBEITUNG VON POSTSENDUNGEN UMFASSEND DIE VERWENDUNG EINES DIGITALEN ABBILDES
METHOD FOR PROCESSING POSTAL PACKETS INCLUDING MANAGING DIGITAL IMPRESSIONS OF THE POSTAL PACKETS

(30) Priorité: 24.03.2005 FR 0550775
(43) Date de publication de la demande: 19.12.2007
(73) Titulaire: Solystic, 94257 Gentilly Cedex (FR)
(72) Inventeur: DESPREZ, Olivier, F-78000 Versailles (FR); MIETTE, Emmanuel, F-95210 Saint Gratien (FR); CAILLON, Christophe, F-91220 Bretigny Sur Orge (FR)
(74) Mandataire: Prugneau, Philippe
(86) Numéro de dépôt international: PCT/FR2005/051020
(87) Numéro de publication internationale: WO 2006/100357

(56) Documents cités:
- EP-A- 1 222 037
- FR-A- 2 841 673

## Description

L'invention concerne un procédé de traitement d'envois postaux dans lequel lors d'une première passe de tri des envois, on forme une image numérique d'un envoi comportant une information d'adresse, on dérive de cette image une empreinte numérique qui est un identifiant logique pour l'envoi et on enregistre en mémoire l'empreinte de l'envoi en correspondance notamment avec des données indicatives de l'information d'adresse de l'envoi et dans lequel lors d'une seconde passe de tri des envois, on forme de nouveau une image numérique d'un envoi courant comportant une information d'adresse, on dérive de cette image une empreinte numérique pour l'envoi courant et on recherche parmi les empreintes enregistrées en première passe de tri une concordance avec l'empreinte de l'envoi courant notamment pour récupérer par association les données d'adresse de l'envoi courant (c.f. FR-A-2 841 673).

Avec un tel procédé, il n'est plus utile d'apposer sur chaque envoi postal un code d'identification ou «chronomarque» appelé encore « IdTag » dans la littérature courante qui peut se présenter sous la forme d'un code à barres par exemple car on utilise à la place un identifiant virtuel d'envoi constitué par l'empreinte de l'envoi. Cette empreinte en pratique est une signature d'image par exemple à deux composantes, l'une des deux composantes caractérisant par exemple les distributions globales et locales des niveaux de gris dans l'image de l'envoi, l'autre des deux composantes caractérisant l'information d'adresse contenue dans l'image de l'envoi à un niveau d'analyse non syntaxique.

L'utilisation des empreintes numériques pose toutefois le problème d'une recherche de concordance entre une empreinte numérique courante et un grand nombre d'empreintes numériques enregistrées, entraînant une difficulté à répondre aux exigences temps réel d'une part et d'autre part une plus grande probabilité de confusion dans la recherche de concordance. Plus l'empreinte numérique courante est comparée à un grand nombre d'empreintes numériques enregistrées plus la probabilité de détecter une concordance entre deux empreintes correspondant à deux envois différents est grande. Par conséquent, l'utilisation des empreintes numériques impose de réaliser la recherche de concordance des empreintes dans un espace d'exploration limité.

Dans le document de brevet européen EP1222037, on décrit un procédé tel que défini ci-dessus qui utilise des empreintes pour identifier les envois mais qui nécessite en seconde passe de tri de représenter en entrée de la machine les envois triés en première passe en respectant un certain ordre pour que la recherche de concordance des empreintes se réalise sur un espace d'exploration limité. Pour cela les bacs de sortie de tri remplis d'envois triés en première passe de tri doivent être identifiés par la machine lors de la représentation des envois en seconde passe de tri et les empreintes en mémoire doivent être organisées en séquence, chaque séquence étant attribuée à un bac de sortie de tri de première passe. En pratique, une telle contrainte d'exploitation n'est pas tenable car il est fréquent que dans un processus de tri en plusieurs passes de tri l'ordre relatif des envois soit altéré entre les deux passes de tri, par exemple à la suite du déchargement des sorties de tri dans les bacs, du chargement des envois en entrée de la machine à la suite de la chute d'un bac lors d'une manipulation des bacs, à la suite d'un transbordement de bacs, ou encore à la suite d'un bourrage de la machine lors de la seconde passe de tri.

Le but de l'invention est de proposer un procédé de traitement d'envois amélioré et plus robuste en ce qu'il permet d'effectuer la recherche de concordance d'empreintes sans dépendre de la contrainte d'exploitation exposée ci-dessus.

A cet effet, l'invention a pour objet un procédé de traitement d'envois postaux dans lequel lors d'une première passe de tri des envois, on forme une image numérique d'un envoi, on dérive de cette image une empreinte numérique qui est un identifiant logique pour l'envoi et on enregistre en mémoire l'empreinte de l'envoi en correspondance avec des données de l'envoi, et dans lequel lors d'une seconde passe de tri des envois, on forme de nouveau une image numérique d'un envoi courant, on dérive de cette image une empreinte numérique pour l'envoi courant et on recherche parmi les empreintes enregistrées en première passe de tri une concordance avec l'empreinte de l'envoi courant pour récupérer par association les données de l'envoi,
**caractérisé en ce que**
lors de la première passe de tri, on associe en mémoire les empreintes des envois successifs avec des numéros d'ordre chronologique correspondants,
lors de la seconde passe de tri, on récupère pour une série d'empreintes d'envois courants successifs pour lesquelles on a obtenu une concordance avec des empreintes enregistrées en mémoire en première passe de tri une série de numéros d'ordre chronologique correspondants, on calcule pour un envoi courant subséquent un numéro d'ordre chronologique estimé à partir de cette série de numéros d'ordre chronologique et on effectue la recherche de concordance pour l'envoi courant subséquent à partir de ce numéro d'ordre chronologique estimé.

L'idée à la base de l'invention est donc de constituer en mémoire lors de la première passe de tri des séquences d'empreintes correspondant à des séquences d'envois qui sont susceptibles de se répéter en tout ou en partie en seconde passe de tri. Ces séquences d'empreintes peuvent être définies sur la base de l'ordre chronologique selon lequel les envois sont dirigés dans un bac de sortie de tri de première passe de tri. Lors de la seconde passe de tri, si le début d'une séquence d'envois est détecté sur la base d'une détection d'une séquence d'empreintes correspondantes, on peut prédire par un calcul d'estimation pour un envoi courant la position de l'empreinte de l'envoi courant dans une séquence ordonnée d'empreintes enregistrées en première passe de tri.

Avec le procédé selon l'invention, il est possible d'effectuer une recherche de concordance d'empreintes dans un espace d'exploration limité même si le séquencement des envois en seconde passe de tri n'est pas respecté.

Le procédé selon l'invention peut être mis en oeuvre facilement sur une installation de tri postal existante et peut être exploité dans un processus de tri en plusieurs passes sur plusieurs machines de tri affectées à des centres de tri de départ et d'arrivée par exemple.

Un exemple de mise en oeuvre du procédé selon l'invention est décrit plus en détail ci-après et illustré par les dessins. Cette description n'est donnée qu'à titre d'exemple indicatif et nullement limitatif de l'invention.

La figure 1 illustre de façon très schématique un envoi postal.

La figure 2 montre de façon schématique une machine de tri pour la mise en oeuvre du procédé selon l'invention.

La figure 3 illustre sous la forme d'un organigramme le déroulement du procédé selon l'invention lors d'une première passe de tri.

La figure 4 illustre de façon schématique la structure des données en mémoire dans la machine de tri.

La figure 5 illustre sous la forme d'un organigramme le déroulement du procédé selon l'invention lors d'une seconde passe de tri.

La figure 6 illustre par un graphique le principe du calcul dans le procédé selon l'invention.

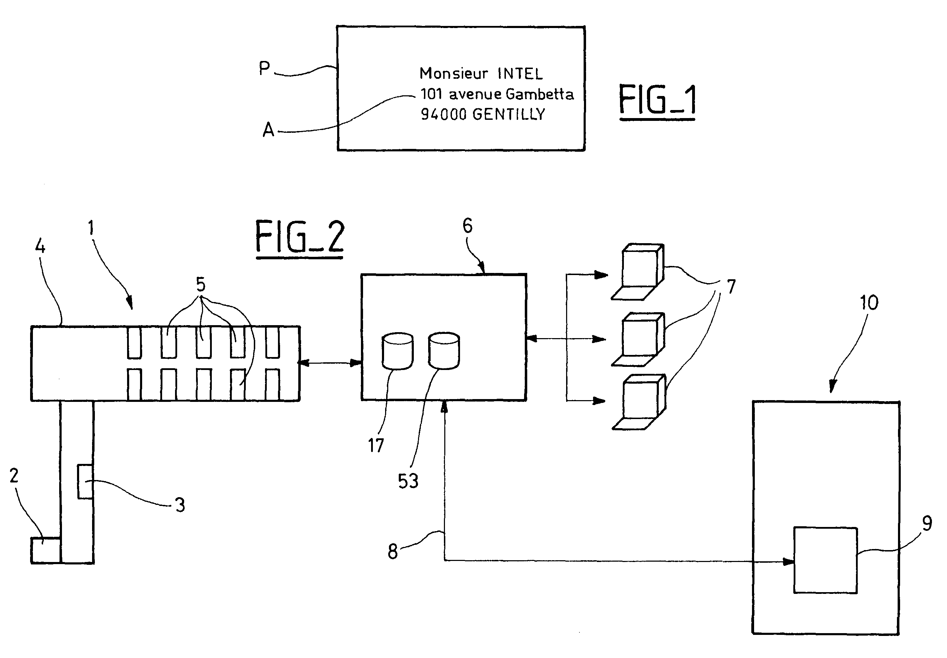

Sur la figure 1, on a illustré un envoi postal P comportant une information d'adresse de distribution A. Cet envoi postal peut être une lettre simple ou un objet plat de petit ou de grand format tel qu'un magazine, un journal, un catalogue avec enveloppe en plastique ou en papier, etc....

La machine de tri postal 1 illustrée sur la figure 2 comprend classiquement une entrée d'alimentation 2 avec un magasin de chargement des envois P et un dépileur pour la mise en série sur chant des envois postaux, une caméra numérique 3 pour former une image de la surface de chaque envoi comportant l'information d'adresse de distribution A et un carrousel à godets 4 qui dirige les envois vers des sorties de tri munies chacune d'un bac de sortie de tri 5. Chaque sortie de tri peut être équipée de plusieurs bacs (typiquement un bac avant et un bac arrière) de sortie de tri ou d'un bac compartimenté sans sortir du cadre de l'invention.

Sur la figure 2, on a également représenté par 6 un système de traitement de données associé à un système de vidéo-codage 7. Les systèmes 6 et 7 constituent un système de reconnaissance d'adresse par OCR qui à partir d'une image d'un envoi P formée par la caméra 3, extrait automatiquement ou via l'intervention d'un opérateur de vidéo-codage, l'information d'adresse A sur la base de laquelle est déterminée une destination de tri pour l'envoi qui correspond à une sortie de tri de la machine.

En outre le système 6 est agencé selon l'invention pour dériver de l'image numérique d'un envoi formée par la caméra 3 une empreinte numérique qui est une signature d'image constituant un identifiant logique pour l'envoi.

Sur la figure 2, on a également représenté par 9 un système analogue au système 6 mais qui fait partie d'une autre machine de tri 10, ce système 9 étant relié en communication par exemple par un réseau de télécommunication 8 au système 6 pour une application du procédé selon l'invention à un processus de tri en plusieurs passes de tri sur plusieurs machines de tri.

Le procédé selon l'invention s'applique au tri automatique d'envois dans lequel des envois sont d'abord triés dans un ou plusieurs centres de tri dits de départ, et après regroupement, sont triés de nouveau dans un autre centre de tri dit d'arrivée qui peut être distant des centres de tri de départ.

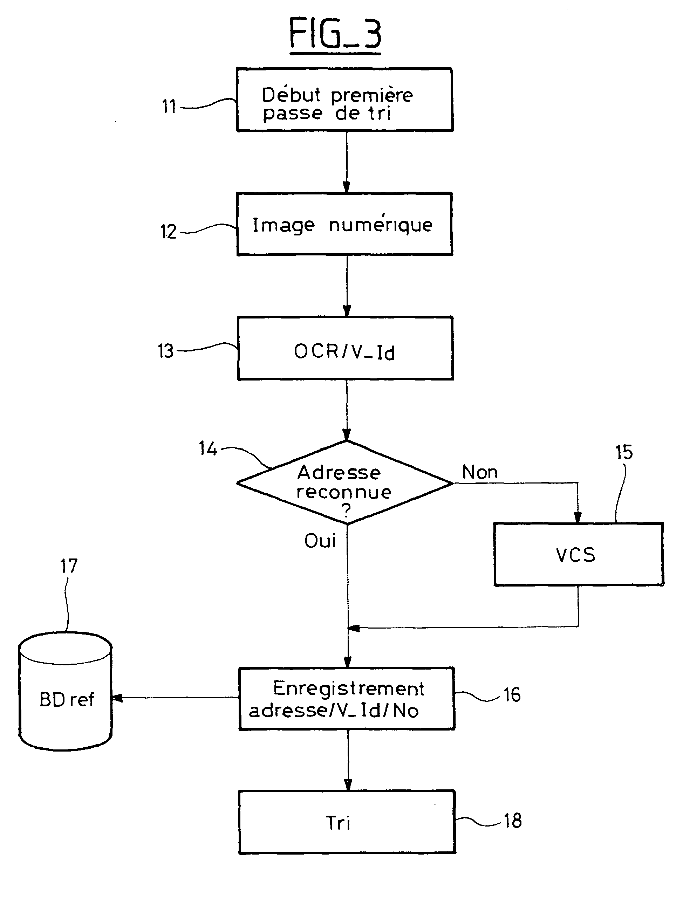

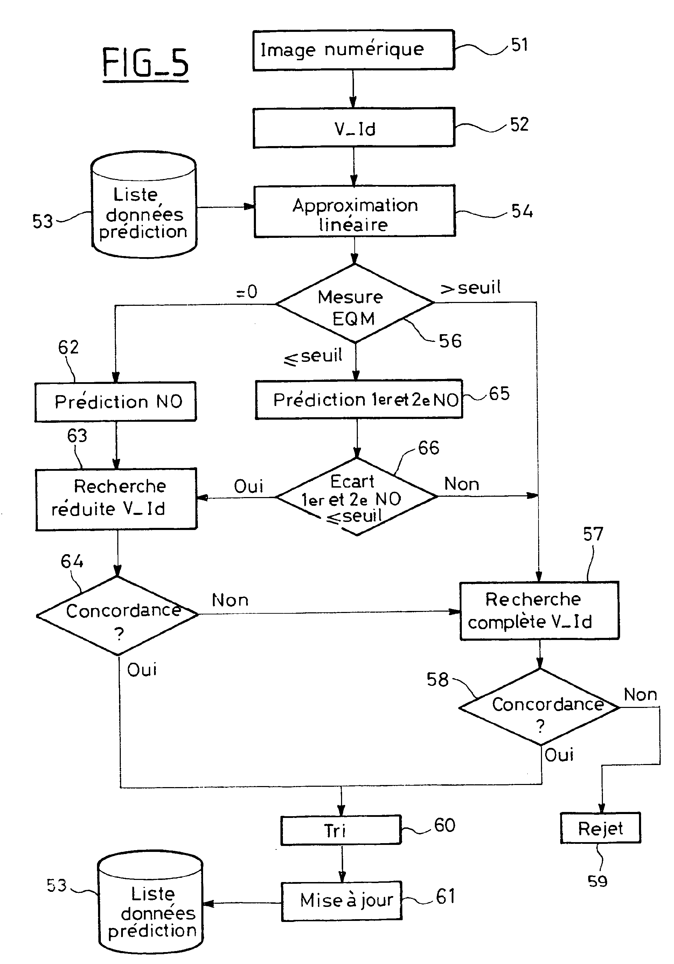

Les figures 3 et 5 illustrent un exemple de mise en oeuvre du procédé selon l'invention dans le cas d'un tri en deux passes sur une même machine de tri telle que la machine 1.

En se référant à la figure 3, dans une étape initiale 11 d'une première passe de tri, on injecte dans la machine de tri 1 des envois postaux P par l'entrée d'alimentation 2. Les envois postaux P sont dépilés et convoyés en série sur chant jusqu'à la caméra numérique 3.

A l'étape 12, on forme une image numérique d'un envoi comportant l'adresse de distribution A.

A l'étape 13, le système 6 entreprend une reconnaissance automatique de l'information d'adresse A par OCR et en même temps dérive de l'image numérique de l'envoi une empreinte numérique V-Id servant d'identifiant logique pour l'envoi.

Dans l'étape 14, si on a obtenu à l'étape 13 une information d'adresse univoque par reconnaissance automatique d'adresse par OCR, on enregistre en mémoire dans l'étape 16 des données représentatives de l'information d'adresse en correspondance avec l'empreinte numérique V-Id de l'envoi.

Si à l'étape14 la reconnaissance automatique d'adresse par OCR donne un résultat partiel, c'est-à-dire une information d'adresse équivoque, ou encore aucun résultat, l'image de l'envoi est transmise au système de vidéo-codage 7 pour une extraction de l'information d'adresse par un opérateur de codage vidéo (étape 15), suite à quoi les données représentatives de l'information d'adresse et l'empreinte numérique sont enregistrées en correspondance en mémoire à l'étape 16.

Dans le procédé selon l'invention, à l'étape 16 on attribue à chaque envoi un numéro d'ordre chronologique NO qui est enregistré en mémoire en correspondance avec l'empreinte de l'envoi.

Chaque numéro d'ordre peut être constitué par exemple par la juxtaposition d'un numéro de centre de tri affecté au centre de tri dans laquelle se trouve la machine de tri 1, d'un numéro de machine de tri affecté à la machine de tri dans laquelle est trié l'envoi, d'un numéro de bac de sortie de tri affecté au bac de sortie de tri dans lequel est dirigé l'envoi et d'un indice chronologique affecté à l'envoi.

En pratique, cet indice est par exemple la valeur d'un compteur associé à un bac de sortie de tri et qui est initialisé au moment où un premier envoi est dirigé vers le bac et qui est incrémenté d'une unité à chaque fois qu'un nouvel envoi est dirigé dans le bac. De cette manière, à chaque envoi est affecté un numéro d'ordre NO qui est unique.

Sur la figure 3, on a illustré par 17, la structure de la base de données dans laquelle sont enregistrées en correspondance pour chaque envoi l'empreinte numérique V-1d, le numéro d'ordre NO et les données d'adresse de l'envoi (non représentées).

A l'étape 18, l'envoi est convoyé vers la sortie de tri correspondante de la machine et est déchargé dans le bac de cette sortie de tri associé.

Le processus symbolisé par les étapes 12 à 18 se répète pour chaque envoi postal dépilé en entrée de la machine.

A l'issue de la première passe de tri, on effectue si nécessaire dans la base de données 17 un regroupement logique des enregistrements de manière à regrouper par séquence les empreintes des envois.

En particulier, dans la base de données 17, les empreintes sont regroupées et ordonnées en série par centre de tri, par machine et par bac selon l'ordre dans lequel les envois sont stockés dans chaque bac de sortie de tri.

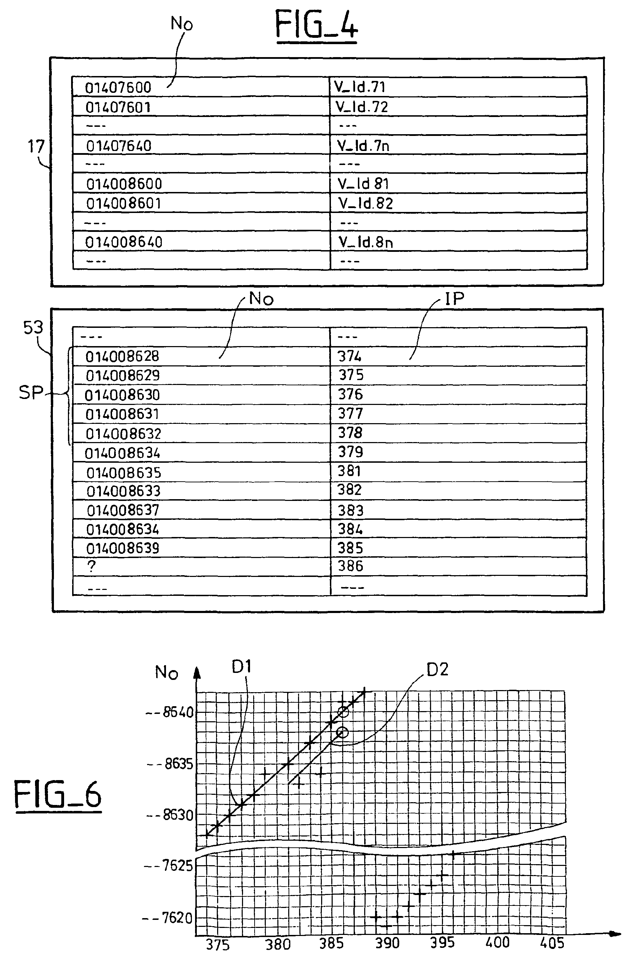

Sur la figure 4 on a représenté partiellement deux séquences d'empreintes. La première séquence comprend une série d'empreintes V-Id qui sont associées respectivement aux numéros d'ordre chronologiques 01407600 à 01407640 affectés aux envois numérotés « 00 » à « 40 » stockés dans le bac « 076 » de la machine de tri « 40 » du centre de tri « 01 ». La seconde séquence comprend une autre série d'empreintes V-Id qui sont associées respectivement aux numéros d'ordre chronologique 014008600 à 014008640 affectés aux envois numérotés « 00 » à « 40 » stockés dans le bac « 086 » de la machine de tri « 40 » du centre de tri « 01 ».

On doit comprendre que la base de données 17 est préparée pour une seconde passe et est organisée de telle sorte que les empreintes sont enregistrées en séquence en suivant la progression des numéros d'ordre chronologique. Sans sortir du cadre de l'invention, on peut enregistrer les empreintes de telle sorte à constituer des séquences qui sont attribuées chacune à deux ou plusieurs bacs.

Sur la figure 5, on a illustré les étapes du procédé selon l'invention lors d'une seconde passe de tri.

Les envois dans les bacs de sortie de tri 5 de première passe sont entrés de nouveau dans la machine de tri 1 et sont dépilés pour être convoyés en série sur chant vers la caméra 3.

On forme de nouveau dans l'étape 51 une image numérique de la surface d'un envoi courant comportant l'information d'adresse A et dans l'étape 52 on dérive de nouveau une empreinte V-Id pour l'envoi courant à partir de son image numérique, dite empreinte courante.

Dans l'étape 52, on attribue en plus à l'envoi courant un indice de passage IP d'envoi, dit indice de passage courant. Autrement dit, on compte les envois successifs et on attribue à l'envoi courant un numéro de passage (allant de 1 à n...).

A l'étape 54, on calcule pour l'envoi courant un numéro d'ordre NO chronologique estimé. Selon l'invention, ce calcul est réalisé par approximation linéaire à partir d'une série de numéros d'ordre chronologique stockés en mémoire dans une liste de données 53 dite liste de données de prédiction. Au démarrage de la seconde passe de tri, cette liste de données de prédiction est vide.

Pour mieux comprendre le principe du calcul on a représenté sur le graphique de la figure 6, un axe des abscisses sur lequel sont portés des indices IP de passage d'envoi 374 à 405 qui correspondent respectivement au passage en seconde passe des 374^{ème} à 405^{ème} envois pour lesquels une empreinte numérique V-Id a été extraite dans l'étape 52. On a reporté sur l'axe des ordonnées, des exemples de numéros d'ordre chronologique NO attribués aux envois en première passe, ici des envois stockés dans les bacs numérotés « 76 » et « 86 ».

Le calcul par approximation linéaire consiste, à partir d'une série de couples indice de passage d'envoi/numéro d'ordre chronologique (IP, NO) illustrés par une croix sur la figure 6, à déterminer par un système d'équation les coefficients a, b d'une droite (NO = a.IP + b) telle que D1 ou D2 pour pouvoir ensuite calculer un numéro d'ordre chronologique NO placé sur cette droite en fonction d'un indice de passage IP courant.

Dans le procédé selon l'invention, la dispersion des couples indice de passage/numéro d'ordre chronologique enregistrés dans la liste de données de prédiction 53 est en outre mesurée en utilisant une mesure telle que l'erreur quadratique moyenne EQM qui fait l'objet de l'étape 56.

Au début de la deuxième passe de tri, comme il n'y a pas encore assez de couples indice de passage/numéro d'ordre chronologique dans la liste de données de prédiction 53, l'étape 56 se poursuit directement à l'étape 57 dans laquelle on recherche pour l'empreinte courante une concordance avec une empreinte enregistrée dans la base de données 17 en balayant complètement l'ensemble de la base de données 17.

Si on n'obtient pas de concordance à l'étape 58 l'envoi courant est envoyé sur une sortie de rejet.

Si on obtient une concordance à l'étape 58, on récupère de la base de données 17 à partir de cette empreinte concordante les données d'adresse de l'envoi ainsi que le numéro d'ordre chronologique associé à l'empreinte.

A l'étape 60, on dirige l'envoi courant vers une sortie de tri correspondante et à l'étape 61, on enregistre dans la liste de données de prédiction 53, le couple indice de passage/numéro d'ordre chronologique associé à l'envoi courant. Par exemple, pour l'envoi postal dont l'indice de passage IP est 374 on a détecté une concordance de son empreinte numérique avec l'empreinte numérique enregistrée en mémoire dans la base de données 17 dont le numéro d'ordre NO est 014008628 (voir figure 4).

Le processus des étapes 51 à 61 comme indiqué plus haut se répète ainsi pour des envois courants successifs et si par exemple pour cinq envois courants successifs (environ 1/20^{ème} de la capacité de stockage d'un bac de sortie de tri) on a obtenu respectivement cinq concordances d'empreintes, on a constitué dans la liste de données de prédiction 53, après le cinquième envoi courant, une série de cinq couples indice de passage/numéro d'ordre chronologique.

Maintenant pour un envoi courant subséquent (par exemple l'envoi d'indice de passage égal à 379 sur la figure 6) succédant aux envois d'indice de passage 374 à 378, on effectue dans l'étape 54 une approximation linéaire des cinq derniers couples indice de passage/numéro d'ordre chronologique enregistrés dans la liste de données de prédiction 53 et on obtient des coefficients d'une droite telle que D1.

A l'étape 56, on mesure l'écart entre les points constitués par les cinq derniers couples indice de position/numéro d'ordre chronologique de la liste de prédiction 53 par rapport à la droite D1, par exemple au moyen d'une mesure d'erreur quadratique moyenne EQM.

Si à l'étape 56, l'erreur quadratique moyenne EQM mesurée est supérieure à une certaine valeur de seuil, le processus se poursuit à l'étape 57 comme décrit plus haut.

Si à l'étape 56, l'erreur quadratique moyenne EQM mesurée est nulle (égale à zéro), c'est-à-dire que la série des cinq derniers couples indice de passage/numéro d'ordre chronologique enregistrés dans la liste de données 53 sont alignés parfaitement sur une droite telle que D1, on poursuit le processus à l'étape 62 en calculant pour l'indice de passage courant (ici l'indice 379) le numéro d'ordre chronologique estimé qui correspond sur la droite D1, dans l'exemple le numéro d'ordre chronologique estimé est 8633, et on procède à une recherche de concordance d'empreintes dans l'étape 63 entre l'empreinte courante et les empreintes contenues dans un espace d'exploration de la base de données 17 constitué par le voisinage de l'empreinte associée au numéro d'ordre chronologique estimé. Ce voisinage d'exploration peut être par exemple limité à une quarantaine d'empreintes situées de part et d'autre de cette empreinte associée dans la base de données 17.

Dans le cas où à l'étape 56, l'erreur quadratique moyenne EQM mesurée est nulle on mémorise les coefficients a et b de la droite obtenue en 54. On comprend, que dans le cas d'une EQM nulle, on a retrouvé en deuxième passe de tri une séquence d'envois, dite séquence parfaite, dans laquelle cinq envois successifs sont dans le même ordre chronologique qu'en première passe de tri. Les couples indice de passage/numéro d'ordre chronologique constituant la séquence parfaite sont montrés sur la figure 4 par la référence SP et sur la figure 6 par la droite D1. Par ailleurs, pour toute nouvelle mesure d'EQM nulle, on remplacera en mémoire les coefficients a et b.

Si on trouve une concordance entre l'empreinte courante et l'une des empreintes de l'espace d'exploration à l'étape 64, on dirige l'envoi courant vers une sortie de tri correspondante à l'étape 60 et à l'étape 61 on met à jour la liste de données de prédiction 53 avec le couple indice de passage/numéro d'ordre chronologique de cet envoi courant. On remarque que dans l'exemple, pour l'indice de passage 379, le numéro d'ordre chronologique de l'empreinte concordante est 8634 alors que le numéro d'ordre chronologique estimé est 8633.

Si à l'étape 64, on ne trouve pas de concordance d'empreintes dans l'espace d'exploration, on procède à un balayage complet de la base de données 17 dans l'étape 57 pour la recherche d'une concordance d'empreintes comme indiqué plus haut. Suite à quoi, l'envoi peut être dirigé vers une sortie de rejet (étapes 58 et 59) ou peut être dirigé vers une sortie de tri (étape 60) avec mise à jour de la liste de données de prédiction 53 (étape 61).

Maintenant si à l'étape 56, l'erreur quadratique moyenne EQM mesurée est inférieure audit certain seuil (5 par exemple) mais n'est pas nulle, selon le procédé de l'invention, on calcule pour l'indice de passage courant deux numéros d'ordre chronologique estimés dans l'étape 65. Ce cas est illustré figure 6 pour l'indice de passage courant 386. Le premier numéro d'ordre est calculé pour l'indice de passage courant (386) à partir des coefficients mémorisés a et b de la droite D1, dans l'exemple le numéro d'ordre chronologique correspondant sur la droite D1 est 8640. Le deuxième numéro d'ordre chronologique est calculé à partir d'une droite D2 obtenue par approximation linéaire (étape 54) des cinq derniers couples indice de position/numéro d'ordre chronologique de la liste de données de prédiction 53. Dans l'exemple, le deuxième numéro d'ordre chronologique correspondant sur la droite D2 est 8638.

Dans l'étape 66, on mesure donc l'écart entre le premier et le deuxième numéro d'ordre chronologique calculé et si cet écart est inférieur ou égal à un certain seuil, le processus poursuit à l'étape 63 par une recherche de concordance d'empreintes sur un espace d'exploration centré autour du premier numéro d'ordre chronologique calculé et si cet écart est supérieur audit seuil, le processus se poursuit à l'étape 57 par une recherche de concordance d'empreintes sur l'ensemble de la base de données 17. En pratique, la valeur de seuil à l'étape 66 peut être égale à 2.

Dans l'exemple, l'écart entre le premier (8640) et le deuxième (8638) numéro d'ordre chronologique calculé est de deux. On recherche donc, à l'étape 63, une concordance autour du numéro d'ordre chronologique 8640 dans la base de données 17. Si aucune concordance n'est trouvée à l'étape 64 le processus se poursuit à l'étape 57.

Dans le cas où une concordance a été trouvée à l'une des étapes 58 ou 64, l'envoi est dirigé dans l'étape 60 vers la sortie de tri correspondante et la liste de données de prédiction 53 est mise à jour à l'étape 61.

Dans l'exemple, à l'étape 61, on enregistre dans la liste de données de prédiction 53 le couple indice de passage courant 386 et numéro d'ordre chronologique 8641, une concordance entre l'empreinte numérique courante et l'empreinte dans la base de donnée 17 ayant le numéro d'ordre chronologique 8641 ayant été déterminé à l'une des étapes 58 ou 64 du procédé.

Avec le procédé selon l'invention, il est donc possible d'effectuer une recherche de concordance d'empreintes sur un espace d'exploration limité même si les envois sont injectés dans la machine en seconde passe de tri sans respect du séquencement.

Le procédé selon l'invention s'applique de la même façon à une passe de tri subséquente à la seconde passe de tri ainsi qu'à des passes de tri effectuées sur des machines différentes. Dans ce dernier cas, les bases de données 17 constituées sur les différentes machines de tri en première passe sont transférées par un réseau de télécommunication tel que 8 vers une machine de tri de seconde passe où elles sont regroupées pour constituer des séquences d'empreintes comme décrit plus haut.

## Revendications

1. Procédé de traitement d'envois postaux dans lequel lors d'une première passe de tri des envois, on forme (12) une image numérique d'un envoi, on dérive (15) de cette image une empreinte numérique (V-Id) qui est un identifiant logique pour l'envoi et on enregistre en mémoire l'empreinte de l'envoi en correspondance avec des données de l'envoi et dans lequel lors d'une seconde passe de tri des envois, on forme (51) de nouveau une image numérique d'un envoi courant, on dérive (52) de cette image une empreinte numérique pour l'envoi courant et on recherche parmi les empreintes enregistrées en première passe de tri une concordance avec l'empreinte de l'envoi courant pour récupérer par association les données de l'envoi,
**caractérisé en ce que**
lors de la première passe de tri, on associe (16) en mémoire les empreintes des envois successifs avec des numéros d'ordre chronologique correspondants (NO),
lors de la seconde passe de tri, on récupère (61) pour une série d'empreintes d'envois successifs pour lesquelles on a obtenu une concordance avec des empreintes enregistrées en mémoire en première passe de tri une série (S1,S2) de numéros d'ordre chronologique correspondants, on calcule (62,65) pour un envoi courant un numéro d'ordre chronologique estimé à partir de cette série de numéros d'ordre chronologique et on effectue la recherche de concordance (63) avec l'empreinte de l'envoi courant à partir de ce numéro d'ordre chronologique estimé.

2. Procédé selon la revendication 1, dans lequel le calcul du numéro estimé d'ordre chronologique consiste en une approximation linéaire.

3. Procédé selon la revendication 2, dans lequel on calcule (65) deux numéros d'ordre chronologique par approximation linéaire à partir de deux séries d'empreintes d'envois successifs et on mesure un écart entre les deux numéros d'ordre chronologique calculés.

4. Procédé selon l'une des revendications 1 à 3, dans lequel on effectue la recherche de concordance parmi les empreintes enregistrées en première passe de tri dans un espace d'exploration centré autour de l'empreinte associée à un numéro d'ordre chronologique calculé.

5. Procédé selon l'une des revendications 1 à 4, dans lequel les envois postaux sont dirigés vers des bacs de sortie de tri d'une machine de tri et dans lequel l'ordre chronologique est l'ordre de chargement des envois dans les bacs de sortie de tri.

6. Procédé selon l'une des revendications 1 à 5, dans lequel le numéro d'ordre chronologique est constitué par la juxtaposition d'un numéro de centre de tri, d'un numéro de machine de tri, d'un numéro de bac de sortie de tri et d'un indice chronologique.

## Claims

1. A method of processing postal items, which method consists, during a first pass for sorting the items, in taking (12) a digital picture of a postal item, in deriving (15) from said picture a digital fingerprint (V-ID) which is a logic identifier for the item, and in storing the fingerprint of the item in a memory in correspondence with data about the item, and consists, during a second pass for sorting the items, in taking again (51) a digital picture of a current mail item, in deriving (52) from said image a digital fingerprint for the current item, and in searching the fingerprints recorded in the first sorting pass for a match with the fingerprint of the current item in order to retrieve the data about the item by association;
said method being **characterized in that:**
during the first sorting pass, said method further consists, in the memory, in associating (16) the fingerprints of the successive items with corresponding chronological serial numbers (SN); and
during the second sorting pass, for a series of successive item fingerprints for which matches have been obtained with fingerprints recorded in the memory in the first sorting pass, said method further consists in retrieving (61) a series (S1, S2) of corresponding chronological serial numbers, in computing (62, 65) an estimated chronological serial number for a current item from said series of chronological serial numbers, and in searching (63) for a match with the fingerprint of the current item on the basis of the estimated chronological serial number.

2. A method according to claim 1, in which the computation of the estimated chronological serial number consists in a linear approximation.

3. A method according to claim 2, in which two chronological serial numbers are computed (65) by linear approximation on the basis of two series of successive item fingerprints, and a distance between the two computed chronological serial numbers is measured.

4. A method according to any one of claims 1 to 3, in which the search for a match is performed on the fingerprints recorded in the first sorting pass in an exploration space centered around the fingerprint associated with a computed chronological serial number.

5. A method according to any one of claims 1 to 4, in which the postal items are directed to the sorting outlet bins of a sorting machine and in which the chronological order is the order in which the items are loaded into the sorting outlet bins.

6. A method according to any one of claims 1 to 5, in which the chronological serial number is constituted by the juxtaposition of a sorting center number, of a sorting machine number, of a sorting outlet bin number, and of a chronological index.

## Patentansprüche

1. Verfahren zur Bearbeitung von Postsendungen, in welchem bei einem ersten Sortierdurchgang der Sendungen ein Digitalbild einer Sendung gebildet wird (12), von diesem Bild ein digitales Abbild (V-Id), welches ein logisches Kennzeichen für die Sendung ist, abgeleitet (15) und das Abbild der Sendung in Übereinstimmung mit den Daten der Sendung abgespeichert wird, und in welchem bei einem zweiten Sortierdurchgang der Sendungen erneut ein Digitalbild einer laufenden Sendung gebildet wird (51), von diesem Bild ein digitales Abbild für die laufende Sendung abgeleitet (52) wird und unter den im ersten Sortierdurchgang gespeicherten Abbildern eine Übereinstimmung mit dem Abbild der laufenden Sendung gesucht wird, um die Daten der Sendung durch Assoziation zu erhalten,
**dadurch gekennzeichnet, dass**
beim ersten Sortierdurchgang die Abbilder der aufeinander folgenden Sendungen mit den entsprechenden Nummern der chronologischen Reihenfolge (NO) im Speicher assoziiert werden (16),
beim zweiten Sortierdurchgang für eine Serie von Abbildern aufeinander folgender Sendungen, für welche eine Übereinstimmung mit den im ersten Sortierdurchgang gespeicherten Abbildern erzielt wurde, eine Serie (S1, S2) von entsprechenden Nummern der chronologischen Reihenfolge erhalten wird (61), für eine laufende Sendung eine geschätzte Nummer der chronologischer Reihenfolge ausgehend von dieser Serie von Nummern der chronologischen Reihenfolge berechnet wird (62, 65) und die Suche nach Übereinstimmung (63) mit dem Abbild der laufenden Sendung ausgehend von dieser geschätzten Nummer der chronologischen Reihenfolge durchgeführt wird.

2. Verfahren nach Anspruch 1, in welchem die Berechnung der geschätzten Nummer der chronologischen Reihenfolge aus einer linearen Näherung besteht.

3. Verfahren nach Anspruch 2, in welchem zwei Nummern einer chronologischen Reihenfolge durch lineare Näherung, ausgehend von zwei Serien von Abbildern aufeinander folgender Sendungen berechnet (65) werden und ein Abstand zwischen den beiden berechneten Nummern der chronologischen Reihenfolge gemessen wird.

4. Verfahren nach einem der Ansprüche 1 bis 3, in welchem die Übereinstimmungssuche unter den im ersten Sortierdurchgang gespeicherten Abbildern in einem zentrierten Untersuchungsbereich im Umfeld des mit einer berechneten Nummer der chronologischen Reihenfolge verbundenen Abbildes, durchgeführt wird.

5. Verfahren nach einem der Ansprüche 1 bis 4, in welchem die Postsendungen zu den Behältern der Sortierausgänge einer Sortiermaschine geleitet werden und in welchem die chronologische Reihenfolge die Beladungsreihenfolge der Sendungen in die Behälter des Sortierausgangs ist.

6. Verfahren nach einem der Ansprüche 1 bis 5, in welchem die Nummer der chronologischen Reihenfolge durch das Aneinanderreihen einer Nummer des Sortierzentrums, einer Nummer der Sortiermaschine, einer Nummer des Behälters des Sortierausgangs und einer chronologischen Kennziffer gebildet wird.
